# EUROPEAN PATENT APPLICATION

(11) **EP 4 588 710 A2**
(43) Date of publication of application: **23.07.2025**
(21) Application number: 24205393.2
(22) Date of filing: 08.10.2024
(51) Int. Cl.: B60L 50/30, G01C 19/06, G05D 1/00, H02J 15/00, H02K 7/02, H02K 7/18

(54) **ENERGY STORAGE DEVICE**

(30) Priority: 02.12.2023 IL 30902623
(71) Applicant: Konovalov, Sergey, Nesher (IL)
(72) Inventor: Konovalov, Sergey, Nesher (IL)
(74) Representative: Harrison IP Limited

(57) **Abstract**

Disclosed is a device suitable for storing received electrical energy as rotational energy and, providing the stored energy as electrical energy on demand.

## Description

### RELATED APPLICATION

The present application gains priority from Israel Patent IL 309026 having a filing date of 2 December 2023 and which was granted on 2 July 2024.

### FIELD AND BACKGROUND OF THE INVENTION

The invention, in some embodiments, relates to the field of energy storage and, more particularly but not exclusively, to a device suitable for storing received electrical energy as rotational energy and, providing the stored energy as electrical energy on demand.

A challenge in the use of electrical power is load balancing the electricity generated with the electricity needed at any moment. Excess electricity may be produced when there is insufficient demand, for example during regenerative braking, during daylight hours using solar panels or when there is a particularly brisk wind using windmills. In contrast, insufficient electricity may be available when it is needed, for example when an electrical vehicle accelerates, at night with solar panels or when there is insufficient wind.

Known electrical energy storage devices have various limitations and disadvantages.

It would be useful to have a device able to store received electrical energy and to provide the stored energy as electrical energy on demand

### SUMMARY OF THE INVENTION

Some embodiments of the invention relate to a device suitable for storing received electrical energy as rotational energy and, providing the stored energy as electrical energy on demand.

According to an aspect of some embodiments of the teachings herein, there is provided a device for storing received electrical energy as rotational energy and for providing the stored energy as electrical energy on demand (in some preferred embodiments in electric vehicles and preferably without energy losing during driving, rotation, vibration and another intrusion), comprising:
a. a base (e.g., of electric vehicle - chassis);
b. a frame rotatably-attached to the base, allowing rotation of the frame around a frame spin axis directed in a first direction;
c. a gimbal rotatably-attached to the frame, allowing rotation of the gimbal around a gimbal spin axis that is perpendicular to the frame spin axis;
d. a rotor rotatably-attached to the gimbal, allowing rotation of the rotor around a rotor spin axis that is perpendicular to the gimbal spin axis;

wherein the base, the frame, the gimbal and the rotor together constitute a gyroscope assembly (preferably providing three-dimensional free spinning of the rotor as a field that eliminates losing energy mechanical friction);
and wherein the rotor is configured as a rotor of a rotating electric machine functionally-associated with the field of a rotating electric machine,
and the gimbal is configured as a stator of the rotating electric machine with a functionally-associated stator leads to transmit electricity to and from the gimbal, the stator leads comprising at least two rotary electric connectors: a two stator leads gimbal-frame rotary electric connectors, and a two stator leads frame-base rotary electric connectors.

In some embodiments, the device further comprises electrical circuitry functionally associated with the stator lead 1 and the stator lead 2, the electrical circuitry having at least three states:
i. a first state wherein the electrical machine functions as a motor, allowing electricity output to the electrical circuitry to increase the rate of rotation of the rotor, allowing electrical energy of the electricity to be stored as rotational energy of the rotor;
ii. a second state wherein no electricity passes through the stator lead 1 and the stator lead 2 so that the rotor can rotate without inductive braking by interaction with the stator; and
iii. a third state wherein the electrical machine functions as a generator, allowing controlled conversion of rotational energy of the rotor to electricity that can be output from the electrical circuitry.

In some embodiments, at least one of the rotary electric connectors comprises a slip ring that binds securely the stator coil to another electric devices.

In some embodiments, at least one of the rotary electric connectors comprises a rotary transformer.

In some embodiments, the rotor is the armature of the rotating electric machine and the stator is the field of the rotating electric machine.

In some embodiments, the rotor is the field of the rotating electric machine and the stator is the armature of the rotating electric machine.

Aspects and embodiments of the invention are described in the description hereinbelow and in the appended claims and Figures.

### BRIEF DESCRIPTION OF THE FIGURES

Some embodiments of the invention are described herein with reference to the accompanying figures. The description, together with the figures, makes apparent to a person having ordinary skill in the art how some embodiments of the invention may be practiced. The figures are for the purpose of illustrative discussion and no attempt is made to show structural details of an embodiment in more detail than is necessary for a fundamental understanding of the invention. For the sake of clarity, some objects depicted in the figures are not to scale.

In the Figures:

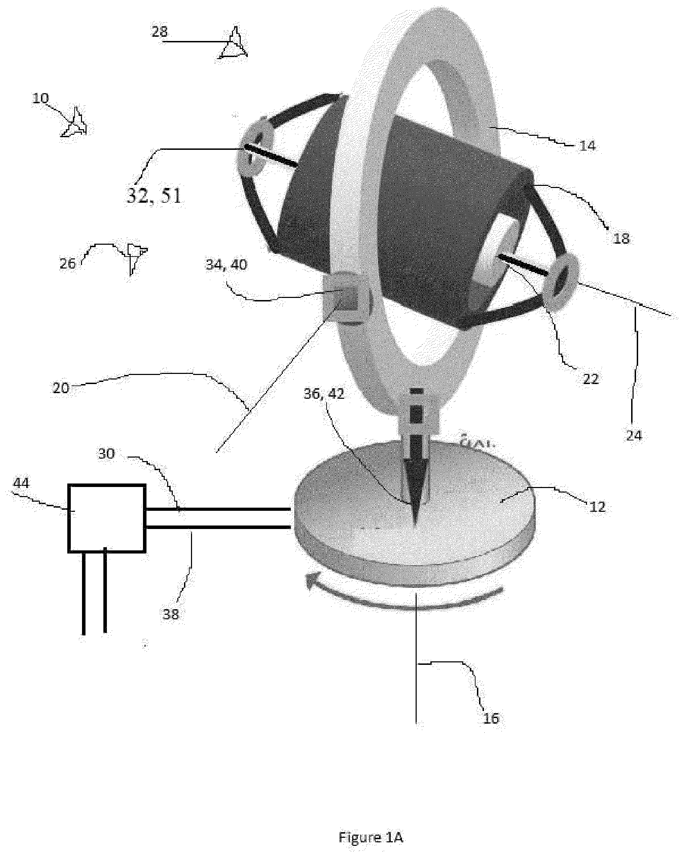

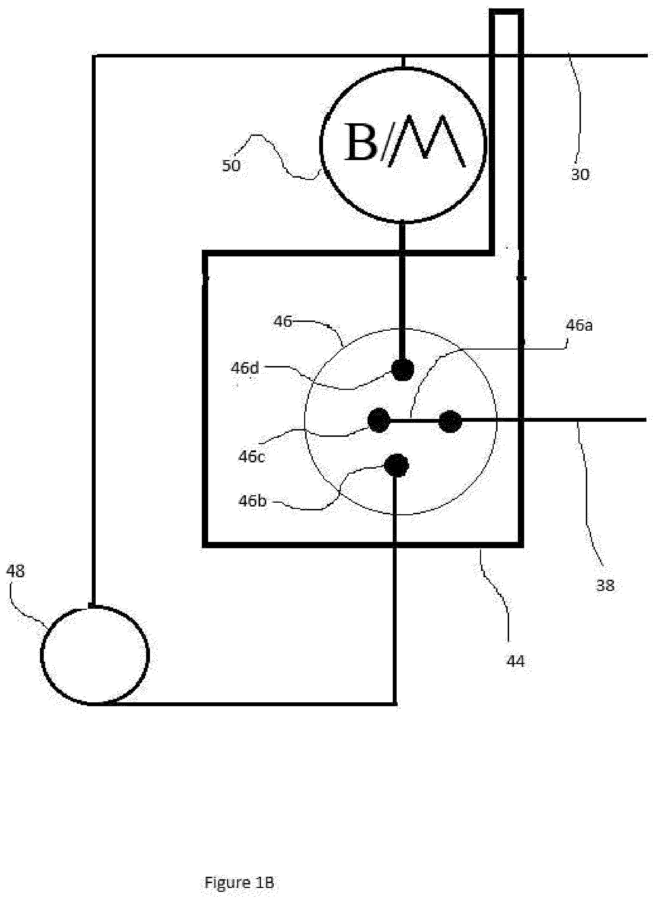

Figures 1A and 1B are schematic depictions of an exemplary embodiment of the device according to the teachings herein, Figure 1A of mechanical portions of the device and Figure 1B of some of the electrical circuitry of the device.

### DESCRIPTION OF SOME EMBODIMENTS OF THE INVENTION

The invention, in some embodiments thereof, relates to a device suitable for storing received electrical energy as rotational energy and, providing the stored energy as electrical energy on demand.

The principles, uses and implementations of the teachings herein may be better understood with reference to the accompanying description and figures. Upon perusal of the description and figures present herein, one skilled in the art is able to implement the invention without undue effort or experimentation. In the figures, like reference numerals refer to like parts throughout.

Before explaining at least one embodiment in detail, it is to be understood that the invention is not necessarily limited in its application to the details of construction and the arrangement of the components and/or methods set forth herein. The invention is capable of other embodiments or of being practiced or carried out in various ways. The phraseology and terminology employed herein are for descriptive purpose and should not be regarded as limiting.

An exemplary embodiment of a device according to the teachings herein is schematically depicted in Figures 1A (mechanical components of the device) and Figure 1B (electrical circuitry of the device).

In Figure 1A, a device **10** for storing received electrical energy as rotational energy and for providing the stored energy as electrical energy on demand according to the teachings herein, comprises:
a. a base **12;**
b. a frame **14** rotatably-attached to base **12,** allowing rotation of frame **14** around a frame spin axis **16** directed in a first direction;
c. a gimbal **18** rotatably-attached to frame **14,** allowing rotation of gimbal **18** around a gimbal spin axis **20** that is perpendicular to frame spin axis **16;**
d. a rotor **22** rotatably-attached to gimbal **18,** allowing rotation of rotor **22** around a rotor spin axis **24** that is perpendicular to gimbal spin axis **20;**
wherein base **12,** frame **14,** gimbal **18** and rotor **22** together constitute a gyroscope assembly **26.**

Specifically, the rotatable-attachment of the various components is through components such as low-friction bearings or similar so that gyroscope assembly **26** can function as a gyroscope as known to a person having ordinary skill in the art.

Further, gimbal **18** contains is configured as a stator of a rotating electric machine **28** with a functionally-associated stator winding lead **30** to transmit electricity to and from stator windings of the gimbal **18** is configured as a stator winding of the rotating electric machine **28** with a functionally-associated stator second winding lead **38** to transmit electricity to and from the stator winding gimbal **18.**

In some embodiments, the rotor is the field of the rotating electric machine, and the stator is the armature winding of the rotating electric machine.

In some alternative embodiments, the rotor is the armature winding of the rotating electric machine and the stator is the field of the rotating electric machine.

Stator leads **30** and **38** each one comprises at least two rotary electric connectors. A first couple rotary electric connectors is stators leads frame-base rotary electric connectors **42** and **36.** They provides electrical communication across the rotating joint between frame **14** and base **12.** A second couple rotary electric connectors is a stator lead gimbal-frame rotary electric connectors **40** and **34** they provide electrical communication across the rotating joint between gimbal **18** and frame **14.**

In some alternative embodiments where rotor is the armature winding leads **30** and **38** comprises at least three couple of rotary electric connectors. A first couple of rotary electric connectors is a rotor leads frame-base rotary electric connectors **36, 42.** They provide electrical communication across the rotating joint between frame **14** and base **12.** A second couple of rotary electric connector is a rotor leads gimbal-frame rotary electric connector **34, 40** that provide electrical communication across the rotating joint between gimbal **18** and frame **14.** A third rotary electric connector is a rotor leads rotor-gimbal rotary electric connector **32, 51** They provides electrical communication across the rotating joint between rotor **22** and gimbal **18.**

The various rotary electric connectors are any suitable rotary electric connector. In some embodiments, at least one rotary electrical connector of the device comprises a slip ring. In some embodiments, at least one rotary electrical connector of the device comprises a rotary transformer. In some embodiments, all of the rotary electric connectors are of the same type. Alternatively, in some embodiments at least one rotary electric connector is of a different type than at least one other rotary electrical connector.

Device **10** further comprises electrical circuitry **44.** Details of electrical circuity **44** are depicted in Figure 1B. In Figure 1B is seen that electrical circuitry **44** of device **10** comprises a three-way switch **46** having three positions.

When conductor **46a** is in electrical communication with contact **46b,** there is an electrical circuit between electrical machine **28** and power source **48** through stator lead **30** and stator lead **38.** This is a first state of electrical circuitry **44** that allows electrical machine **28** to function as a motor. Specifically, electricity input from power source **48** to electrical circuitry **44** to increase the rate of rotation of rotor **22,** thereby allowing electrical energy of the electricity from power source **48** to be stored as rotational energy of rotor **22.**

When conductor **46a** is in electrical communication with contact **46c** (as depicted in Figure 1B) electrical machine **28** is not part of an electrical circuit through stator lead **30** and stator lead **38.** This is a second state of electrical circuitry **44** where no electricity passes through the stator lead **30** and the stator lead **38** so that rotor **22** can rotate without inductive braking by interaction with the stator of electrical machine **28.**

When conductor **46a** is in electrical communication with contact **46d,** there is an electrical circuit between electrical machine **28** and a motor/battery **50** through stator lead **30** and stator lead **38** . This is a third state of electrical circuitry **44** that allows electrical machine **28** to function as a generator, allowing controlled conversion of rotational energy of rotor **22** to electricity that can be output from the electrical circuitry **44** to operate motor or charge a battery **50**.

Unless otherwise defined, all technical and scientific terms used herein have the same meaning as commonly understood by one of ordinary skill in the art to which the invention pertains. In case of conflict, the specification, including definitions, takes precedence.

As used herein, the terms "comprising", "including", "having" and grammatical variants thereof are to be taken as specifying the stated features, integers, steps or components but do not preclude the addition of one or more additional features, integers, steps, components or groups thereof. As used herein, the indefinite articles "a" and "an" mean "at least one" or "one or more" unless the context clearly dictates otherwise.

As used herein, when a numerical value is preceded by the term "about", the term "about" is intended to indicate +/-10%. As used herein, a phrase in the form "A and/or B" means a selection from the group consisting of (A), (B) or (A and B). As used herein, a phrase in the form "at least one of A, B and C" means a selection from the group consisting of (A), (B), (C), (A and B), (A and C), (B and C) or (A and B and C).

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination or as suitable in any other described embodiment of the invention. Certain features described in the context of various embodiments are not to be considered essential features of those embodiments, unless the embodiment is inoperative without those elements.

Embodiments of methods and/or devices described herein may involve performing or completing selected tasks manually, automatically, or a combination thereof. Some methods and/or devices described herein are implemented with the use of components that comprise hardware, software, firmware or combinations thereof. In some embodiments, some components are general-purpose components such as general purpose computers, digital processors or oscilloscopes. In some embodiments, some components are dedicated or custom components such as circuits, integrated circuits or software.

For example, in some embodiments, some of an embodiment is implemented as a plurality of software instructions executed by a data processor, for example which is part of a general-purpose or custom computer. In some embodiments, the data processor or computer comprises volatile memory for storing instructions and/or data and/or a non-volatile storage, for example, a magnetic hard-disk and/or removable media, for storing instructions and/or data. In some embodiments, implementation includes a network connection. In some embodiments, implementation includes a user interface, generally comprising one or more of input devices (e.g., allowing input of commands and/or parameters) and output devices (e.g., allowing reporting parameters of operation and results.

Although the invention has been described in conjunction with specific embodiments thereof, it is evident that many alternatives, modifications and variations will be apparent to those skilled in the art. Accordingly, it is intended to embrace all such alternatives, modifications and variations that fall within the scope of the appended claims.

Citation or identification of any reference in this application shall not be construed as an admission that such reference is available as prior art to the invention.

Section headings are used herein to ease understanding of the specification and should not be construed as necessarily limiting.

## Claims

1. A device (10) for storing received electrical energy as rotational energy and for providing the stored energy as electrical energy on demand in electric vehicles without energy losing during driving, rotation, vibration and another intrusion, comprising:
a. a base (12) of electric vehicle - chassis;
b. a frame (14) rotatably-attached to said base (12), allowing rotation of said frame (14) around a frame spin axis (16) directed in a first direction;
c. a gimbal (18) rotatably-attached to said frame (14), allowing rotation of said gimbal (18) around a gimbal spin axis (20) that is perpendicular to said frame spin axis (16);
d. a rotor (22) rotatably-attached to said gimbal (18), allowing rotation of said rotor (22) around a rotor spin axis (24) that is perpendicular to said gimbal spin axis (20);
wherein said base (12), said frame (14), said gimbal (18) and said rotor (22) together constitute a gyroscope assembly (26) that provides three-dimensional free spinning of the rotor as a field that eliminates losing energy mechanical friction;
and wherein
said rotor (22) is configured as a rotor of a rotating electric machine (28) functionally-associated with the field of a rotating electric machine (28)
and
said gimbal (18) is configured as a stator of said rotating electric machine (28) with a functionally-associated stator leads (38,30) to transmit electricity to and from said gimbal (18), said stator leads (38,30) comprising at least two rotary electric connectors:
a two stator leads gimbal-frame rotary electric connector (34,40), and
a two stator leads frame-base rotary electric connector (36,42).

2. The of claim 1, further comprising electrical circuitry (44) functionally associated with said stator lead 1 (30) and said stator lead 2 (38), said electrical circuitry (44) having at least three states:
i. a first state wherein said electrical machine (28) functions as a motor, allowing electricity output to said electrical circuitry (44) to increase the rate of rotation of said rotor (22), allowing electrical energy of said electricity to be stored as rotational energy of said rotor (22);
ii. a second state wherein no electricity passes through said stator lead 1 (30) and said stator lead 2 (38) so that said rotor (22) can rotate without inductive braking by interaction with said stator; and
iii. a third state wherein said electrical machine functions as a generator, allowing controlled conversion of rotational energy of said rotor (22) to electricity that can be output from said electrical circuitry (44).

3. The device of any one of claims 1 to 2, wherein at least one of said rotary electric connectors comprises a slip ring that binds securely the stator coil to another electric devices.

4. The device of any one of claims 1 to 3, wherein at least one of said rotary electric connectors comprises a rotary transformer.

5. The device of any one of claims 1 to 4, wherein:
said rotor is the armature of said rotating electric machine and
said stator is the field of said rotating electric machine.

6. The device of any one of claims 1 to 4, wherein:
said rotor is the field of said rotating electric machine, and
said stator is the armature of said rotating electric machine.
